Europäisches Patentamt

European Patent Office

Office européen des brevets

(19)

(11) Numéro de publication : **0 131 524**
**B1**

(12) **FASCICULE DE BREVET EUROPÉEN**

(45) Date de publication du fascicule du brevet :
27.05.87

(51) Int. Cl.⁴ : **D 04 H   1/00**

(21) Numéro de dépôt : **84401470.4**

(22) Date de dépôt : **11.07.84**

(54) **Feutre de fibres minérales.**

(30) Priorité : **12.07.83 FR 8311631**

(43) Date de publication de la demande :
**16.01.85 Bulletin 85/03**

(45) Mention de la délivrance du brevet :
**27.05.87 Bulletin 87/22**

(84) Etats contractants désignés :
**AT BE CH DE FR GB IT LI LU NL SE**

(56) Documents cités :
**EP-A- 0 091 381**
**FR-A- 2 106 430**
**FR-A- 2 213 253**
**US-A- 4 238 213**

(73) Titulaire : **ISOVER SAINT-GOBAIN**
**Les Miroirs 18, avenue d'Alsace**
**F-92400 Courbevoie (FR)**

(72) Inventeur : **Battigelli, Jean A.**
**17 Rue E. Vaillant**
**F-60290 Rantigny (FR)**
Inventeur : **Bouquet, François**
**30 rue E. Vaillant**
**F-60290 Rantigny (FR)**
Inventeur : **Barthe, Marie-Pierre**
**11 Le Haras du Bois Vieux Chemin de Senlis**
**F-60270 Gouvieux (FR)**

(74) Mandataire : **Le Vaguerese, Sylvain Jacques et al**
**SAINT-GOBAIN RECHERCHE 39, quai Lucien Lefranc**
**F-93304 Aubervilliers Cedex (FR)**

EP 0 131 524 B1

## Description

L'invention est relative à des feutres de fibres minérales présentant des propriétés améliorées.

De façon plus précise l'invention est relative aux feutres dont les fibres, de type fibres de verre ou analogues, sont produites par passage du matériau qui les constitue, dans un centrifugeur faisant office de filière. Les feutres préparés selon cette technique présentent en commun un certain nombre de propriétés qui permettent de les distinguer de ceux dont les fibres sont préparées par d'autres techniques. Par ailleurs, on peut noter dès à présent qu'en raison de la qualité et des conditions de coûts de mise en œuvre, une part très importante de la production des feutres destinés à l'isolation thermique et acoustique fait appel à une technique de formation des fibres de ce type.

Dans l'ensemble, les feutres obtenus antérieurement présentent des propriétés satisfaisantes. En choisissant convenablement les conditions de production il est possible d'avoir des fibres fines, longues, peu d'infibrés. Ces fibres conduisent à des feutres présentant des qualités isolantes avantageuses et une bonne tenue mécanique indispensable pour leur utilisation. Dans la suite, nous examinerons de façon détaillée ces différentes propriétés et nous verrons à l'occasion quelles relations s'établissent entre les caractéristiques des fibres et la qualité des feutres. Des améliorations de ces produits sont néanmoins toujours souhaitables. C'est ce que l'invention se propose de fournir.

En particulier, l'invention a pour but de fournir des feutres présentant des propriétés améliorées et dont le coût de production reste sensiblement le même que pour les feutres antérieurs à l'invention.

Il est important de souligner les questions de coût de production. On connait en effet d'autres techniques de production des fibres servant à la formation de feutres isolants. Certaines de ces techniques permettent d'atteindre des produits présentant des propriétés intéressantes. Cependant, de façon générale, les coûts de production selon ces techniques sont très sensiblement supérieurs à ceux de la technique considérée selon l'invention.

A titre indicatif, on sait produire des fibres par les techniques d'étirage mécanique. Ces fibres continues dites « textiles » peuvent ensuite être coupées en fragments de longueur voulue et distribuées de façon aléatoire sur un organe de réception pour constituer un feutre. Par ce type de technique on peut obtenir des feutres dont les fibres sont d'une très grande homogénéité. C'est cette homogénéité qui explique que même avec des fibres qui ne sont pas d'une extrême finesse, les feutres obtenus sont de grande qualité. Le mode de production des fibres et les opérations de formation des feutres conduisent à un coût de production très élevé.

Un autre type de technique dit « aérocor » également utilisé pour produire des fibres de qualité, consiste à introduire de fines baguettes de matériau solide dans un courant gazeux chaud à grande vitesse. Les baguettes se ramollissent sous l'effet de la chaleur et s'étirent en fibres longues et fines lorsque les conditions sont bien choisies. Cette technique est également beaucoup plus coûteuse que celle considérée selon l'invention.

Les feutres selon l'invention sont constitués de fibres produites par une technique de centrifugation. Dans cette technique le matériau destiné à former les fibres est conduit dans un organe centrifugeur dont la paroi périphérique est percée de multiples orifices. Sous l'effet de la centrifugation, le matériau est projeté par ces orifices sous forme de minces filaments qui s'étirent. De façon préférée, un courant gazeux à haute température et à grande vitesse longeant la paroi périphérique de l'organe de centrifugation participe à l'étirage des filaments en fibres fines.

Ce type de technique permet une production de bonne qualité, abondante et par suite d'un coût relativement avantageux.

De façon générale les feutres obtenus par ces techniques présentent des caractéristiques bien spécifiques qui permettent de les distinguer des feutres préparés d'une autre façon. Ainsi, si comme nous le verrons, les fibres constituant les feutres selon l'invention présentent une bonne régularité de diamètre, les fibres provenant d'un étirage mécanique ont un diamètre rigoureusement constant. Le diamètre des fibres produites par étirage mécanique est aussi habituellement plus grand que le diamètre moyen des fibres des feutres selon l'invention. En outre le mode de découpage des fibres « textiles » impose des longueurs bien définies.

De la même façon il est possible de mettre en évidence des différences caractéristiques avec les fibres produites par étirage gazeux, dont il a été question plus haut. Une différence importante est liée à la présence de particules infibrées résultant de défauts qui apparaissent lors de la formation des fibres. Il s'agit de particules sensiblement plus grosses que le diamètre moyen des fibres.

Dans les techniques d'étirage de type aérocor, les infibrés sont ordinairement abondants et présentent le plus souvent la forme de crochets. Au contraire dans les techniques de formation de fibres par centrifugation utilisées pour la production des feutres selon l'invention, les particules infibrées qui sont toujours en faible proportion se présentent le plus souvent sous forme de fibres accolées.

La présence de particules infibrées dans les feutres est indésirable. Chacune de ces particules présente une masse importante de matériau si on la compare à celle d'une fibre. Rapportée à la masse du matériau la contribution d'une particule infibrée à l'établissement des propriétés isolantes est très inférieure à celle d'une fibre normale. Autrement dit pour une certaine masse de matériau fibreux, un feutre sans infibrés est meilleur isolant qu'un feutre contenant des infibrés.

0 131 524

Par ailleurs la présence d'infibrés s'accompagne habituellement d'une profonde inhomogénéité des caractéristiques de l'ensemble des fibres, autre facteur défavorable pour la qualité du feutre.

Pour ces raisons l'absence d'infibrés, ou au moins des taux très faibles sont particulièrement souhaitables quel que soit le mode de formation des fibres considéré. De façon générale, les techniques de formation par centrifugation, le centrifugeur faisant filière, sont connues pour aboutir à des taux d'infibrés très faibles. L'invention concerne notamment des feutres dont les taux d'infibrés sont encore plus faibles.

Par définition dans la suite de la demande on qualifie d'infibrés toutes les particules dont les dimensions sont très supérieures au diamètre moyen des fibres. Les infibrés se caractérisent aussi par un élancement, c'est-à-dire un rapport de la longueur au diamètre, faible.

En pratique, on peut considérer comme infibré toute particule dont le diamètre est supérieur à 10 fois le diamètre moyen des fibres.

Le taux d'infibrés dans les produits selon l'invention est inférieur à 1 % et de préférence inférieur à 0,80 % en poids.

Toujours selon l'invention, le taux des infibrés dont les dimensions sont égales ou supérieures à 20 fois le diamètre moyen est inférieur à 0,30 % en poids de l'ensemble du feutre.

Le diamètre moyen varie suivant la nature des produits préparés de sorte que la dimension des particules dites infibrées varie aussi. Pour les feutres destinés à l'isolation, et préparés par des techniques telles que celles envisagées par l'invention, le diamètre des fibres varie environ entre 1 et 20 micromètres et de façon simplifiée on peut considérer comme infibrée toute particule dont le diamètre est supérieur à 40 micromètres.

Suivant cette définition, les feutres selon l'invention se distinguent des feutres obtenus antérieurement par des techniques analogues en ce qu'ils renferment au plus 1 % en poids de particules dont le diamètre est supérieur à 40 micromètres. De préférence cette teneur est inférieure à 0,80 %.

Le détail de la méthode de classement des fibres et des particules est précisé plus loin à propos des exemples.

Etant donné que la mesure est faite de façon pondérale et que les infibrés sont par nature plus pesants que les fibres, le nombre d'infibrés est très faible.

Dans les produits selon l'invention il convient encore de constater que les infibrés sont relativement petits par rapport à ceux que l'on observe dans des produits préparés suivant d'autres techniques. L'étude granulométrique montre en effet que le pourcentage pondéral des particules dont la dimension est supérieure à 80 micromètres est inférieure à 0,3 %.

Dans les produits selon l'invention il n'existe pratiquement pas de particules dont le diamètre est supérieur à 100 micromètres.

Comme nous l'avons indiqué précédemment l'absence d'infibrés est ordinairement associée à une grande homogénéité des caractéristiques des fibres. Cette homogénéité peut s'apprécier par exemple par les variations de diamètre des fibres. On mesure par exemple sur l'histogramme d'un échantillon de feutre l'écart type pour le diamètre des fibres, c'est-à-dire la différence entre les diamètres extrêmes dans l'intervalle desquels se situent 68 % de l'ensemble des fibres.

Le coefficient de variation, c'est-à-dire le rapport de l'écart type au diamètre moyen pour l'échantillon considéré, est une mesure de la dispersion des caractéristiques des fibres.

Sur ce point également les feutres selon l'invention se comparent avantageusement avec les feutres antérieurs connus. Le coefficient de variation est inférieur à 0,65 et de préférence inférieur à 0,60 et peut être aussi réduit que 0,5. En d'autres termes, l'histogramme des fibres dans les feutres selon l'invention est très resseré.

L'observation visuelle des fibres des feutres selon l'invention fait apparaître une régularité de structure sensiblement meilleure que celle des fibres des feutres traditionnels préparés par des techniques de centrifugation analogues. La surface des fibres semble plus lisse, la section des fibres est plus constante, les fibres déformées, essentiellement des fibres recollées, sont moins nombreuses, etc... Ces différences sont bien entendu difficilement quantifiables. Elles sont cependant une utile confirmation des caractéristiques de structure avantageuses des fibres entrant dans la constitution des feutres selon l'invention.

Les feutres selon l'invention se distinguent aussi par la longueur des fibres qui les constituent.

La mesure directe de la longueur des fibres est une opération qui se heurte à de grandes difficultés. La manipulation des fibres occasionne des ruptures qui sont une source d'erreurs. Par ailleurs seules des données statistiques sont significatives. Ceci impose un grand nombre de mesures.

Pour éviter ces difficultés, les techniciens ont mis au point des méthodes spécifiques bien reproductibles.

Une méthode indirecte de mesure de la longueur des fibres consiste à mesurer un volume de sédimentation des fibres mises en suspension dans de l'eau. Les études systématiques conduites sur ce type de mesures montrent que pour un échantillon de masse donnée, le volume de sédimentation croît avec la longueur des fibres qui le constituent. On comprend en effet que le dépôt se faisant de façon aléatoire l'enchevêtrement des fibres soit d'autant plus « lâche » que celles-ci sont plus longues.

De même le volume de sédimentation est fonction du diamètre des fibres. Plus les fibres sont fines, et donc pour une même masse, plus elles sont nombreuses, plus le volume est important.

3

**0 131 524**

Dans des domaines limités de valeurs on peut considérer que le volume est approximativement proportionnel à la longueur et inversement proportionnel au diamètre des fibres.

Cette méthode est désignée généralement par le terme anglosaxon de « bulking ». Elle est d'un usage commode et permet des déterminations relatives pour l'ensemble des fibres de l'échantillon étudié.

Les mesures sont conduites sur des fibres dont la longueur a été préalablement réduite par broyage limité dans des conditions bien déterminées. Le broyage préalable conduit à des fibres de quelques millimètres. Cette longueur reste cependant fonction de la longueur initiale.

Les mesures des hauteurs ou volumes de sédimentation sont établies par rapport à des fibres dont les caractéristiques initiales sont connues.

Par ailleurs la méthode du bulking est aussi un mode d'appréciation de la résistance mécanique des fibres en raison de l'opération de broyage. Il va de soi que des fibres fragiles, même si elles sont longues à l'origine, conduiront après broyage à des volumes de sédimentation relativement faibles. Cette méthode de mesure constitue une appréciation globale de ces deux propriétés : longueur et résistance.

L'accroissement sensible du volume de sédimentation observé pour les feutres selon l'invention traduit nécessairement une amélioration simultanée de la longueur et de la résistance des fibres.

Dans ce qui précède nous avons considéré la qualité des fibres constituant les feutres selon l'invention. Il va de soi que les améliorations des fibres influencent aussi les propriétés des feutres qu'il s'agisse des propriétés isolantes ou des propriétés mécaniques.

Les comparaisons avec les produits connus sont délicates à établir en raison des très nombreux paramètres qui contribuent à l'élaboration de ces propriétés. De façon traditionnelle, les feutres isolants sont classés commercialement en fonction de leur résistance thermique R. Cette résistance thermique est fonction de la finesse des fibres F, de la masse des fibres par unité de surface ou « grammage » m mais aussi de l'épaisseur du feutre et des qualités des fibres que nous avons indiquées précédemment.

Traditionnellement la finesse des fibres est appréciée de façon globale par une mesure dite de micronaire. Le micronaire est déterminé par le débit d'air traversant l'échantillon de fibres de masse donnée (par exemple 5 g). L'échantillon est placé dans un compartiment situé sur un circuit dans lequel circule de l'air sous pression définie. Le micronaire est mesuré par le débit d'air passant à travers l'échantillon.

On constate ainsi que pour une même épaisseur de feutre, une même finesse de fibres et une même résistance thermique les feutres selon l'invention sont plus légers. Autrement dit pour avoir le même effet isolant la masse des fibres nécessaire est moins élevée.

L'abaissement du grammage dans le cas des feutres selon l'invention traduit tout à la fois la meilleure régularité des fibres, l'absence d'infibrés mais aussi une meilleure homogénéité de la distribution des fibres dans le feutre.

Pour définir de façon significative le grammage des feutres, il est nécessaire de préciser d'une part la résistance thermique du feutre R et l'épaisseur e. Ces facteurs sont reliés entre eux par les expressions :

$$m/R = m/e \times \lambda$$

$$m/R = m/e \ (A + B\rho + C/\rho)$$

$$m/R = \rho A + B\rho^2 + C$$

Dans ces expressions $\lambda$ est la conductivité thermique et $\rho$ est la masse volumique du feutre.

Pour les feutres considérés, la masse volumique $\rho$ étant très faible, le facteur $B\rho^2$ peut être négligé en première approximation :

$$m/R = \rho A + C$$

Lorsque m est exprimé en kg/m², R en m² : K/w à 297 °K et $\rho$ en kg/m³ les feutres selon l'invention sont tels que :

$$m/R \leqslant 0,026\rho + 0,2$$

A titre indicatif, pour des feutres selon l'invention dont la masse volumique est de 10 kg/m³, dont les fibres ont une finesse de 3 (sous 5 g), pour une résistance thermique de 2 m²·K/w le grammage peut être de l'ordre ou inférieur à 920 g/m².

Les avantages liés à un grammage réduit pour produire les feutres isolants sont évidents. Avec la même masse de fibres, la quantité de feutre produite est accrue ; le coût de production est donc moindre.

L'amélioration des feutres selon l'invention est aussi sensible au plan mécanique.

C'est le cas notamment de la résistance à la traction.

4

La résistance à la traction dite « aux anneaux » est mesurée suivant la norme ASTM-C-681.76. Suivant cette norme, des anneaux de dimensions bien définies sont découpés dans le feutre. Ces anneaux sont disposés sur deux barres cylindriques de traction. Ils sont soumis à des forces croissantes. On mesure la force exercée à la rupture. Pour obtenir des résultats comparables, la force exercée est rapportée au poids de l'échantillon.

Les feutres selon l'invention liés avec un liant phénolique représentant au plus 4,5 % en poids du produit final offrent une résistance à la traction de préférence au moins égale à 200 gf/g dans le sens longitudinal, c'est-à-dire lorsque les anneaux sont découpés leur longueur s'étendant dans le sens de celle du feutre préparé.

L'amélioration de la résistance à la traction par rapport aux feutres traditionnels peut aussi être rattachée à la présence de fibres plus longues, plus régulières et mieux distribuées. On comprend en particulier que les fibres plus longues améliorent la structure de réseau du feutre. De même il va de soi que des fibres dont la structure est plus régulière, et dont pour cette raison on peut penser qu'individuellement elles présentent une meilleure résistance, (des mesures faites fibre à fibre mais en trop petit nombre pour être transposables à l'ensemble des fibres du feutre ont montré un accroissement de la résistance à la traction) conduisent à une amélioration de la résistance du feutre.

Les feutres selon l'invention par suite de l'amélioration de leurs qualités mécaniques se prêtent aussi sans difficulté à une compression importante. Pour stocker et transporter ces produits volumineux et de faible masse volumique, il est en effet nécessaire de les comprimer. Pour que ces feutres retrouvent ensuite un bon pouvoir isolant, ils doivent reprendre leur épaisseur, même après trois mois en compression. Les feutres selon l'invention peuvent subir de façon satisfaisante des taux de compression égaux ou supérieurs à 5 et qui peuvent s'élever dans certains cas à 7 ou 8, montrant ainsi que les fibres bien régulières dont ils sont constitués se prêtent à des déformations importantes sans rupture.

Les qualités mécaniques des fibres constituant les feutres selon l'invention apparaissent aussi de façon indirecte par la teneur en poussière de ces feutres.

On définit par poussières toutes les particules non fixées au feutre et qui peuvent se détacher de celui-ci sans qu'il soit soumis à des efforts dépassant le cadre d'une mise en œuvre normale.

La présence des poussières dans le feutre résulte principalement du bris des fibres insuffisamment résistantes lors du conditionnement du feutre (découpe, enroulement, compression, etc...).

Les conditions de la mesure sont décrites dans les exemples.

Ces mesures font apparaître de façon significative un très faible taux de poussières pour les produits selon l'invention. La teneur en poussière est inférieure à 0,1 g/m$^2$.

En dehors du fait qu'elle est un indice supplémentaire permettant d'apprécier la qualité des fibres, l'absence de poussières constitue un avantage pour l'utilisateur. Pour cette raison aussi, un produit dépourvu de poussières ou émettant peu de poussières est toujours préféré.

La régularité des fibres dans les feutres selon l'invention apparait aussi dans la façon dont elles se distribuent à l'intérieur du feutre. Il est important en effet que le feutre soit aussi homogène que possible. Pour que l'isolation soit efficace, le feutre ne doit pas présenter de zones dans lesquelles les fibres seraient moins abondantes.

La bonne distribution des fibres peut être appréciée notamment par la résistance que le feutre exerce vis-à-vis de la circulation d'air. Nous verrons dans les exemples que sur ce point également les feutres selon l'invention offrent des avantages. Notamment pour une masse volumique de 10 kg/m$^3$ la résistance mesurée suivant la norme ISO-DIS-4638 est supérieure à 4 Rayl/cm ; pour une masse volumique de 20 kg/m$^3$ elle est supérieure à 10 Rayl/cm.

La production des fibres et des feutres présentant les propriétés indiquées précédemment est obtenue selon l'invention par une technique comprenant une centrifugation. Plus précisément, dans les techniques visées le matériau destiné à la formation des fibres est envoyé à l'état fondu à l'intérieur d'un centrifugeur dont la périphérie est percée de multiples orifices. Sous l'effet de la force centrifuge, le matériau passe par ces orifices et est projeté hors du centrifugeur sous forme de filaments.

Dans le mode préféré un intense courant de gaz chauds longe la paroi du centrifugeur à partir de laquelle les filaments sont projetés. Ces gaz chauds entraînent les filaments et achèvent l'étirage. Cette technique est avantageuse notamment parce qu'elle permet d'obtenir des feutres de bonne qualité dans des conditions de coûts intéressantes.

Ce mode de formation des fibres a fait l'objet de nombreuses publications. On peut se reporter notamment à la demande de brevet française publiée sous le n° 2 443 436.

Pour obtenir par ce type de technique des fibres et des feutres présentant les propriétés indiquées précédemment, un moyen consiste à effectuer la centrifugation en maintenant la vitesse périphérique du centrifugeur supérieure à 50 m/s. Cette vitesse peut être établie avec des centrifugeurs de différents diamètres. Pour produire les fibres en quantités économiques, il est préférable d'opérer avec des centrifugeurs dont le diamètre est supérieur à 500 mm.

Les raisons de l'amélioration des fibres et des feutres ne sont pas bien élucidées. On peut supposer que les fibres au cours de leur formation et pour des raisons diverses ont moins tendance à se heurter les unes aux autres avant d'être figées. Pour cette raison, les fibres sont globalement plus longues et les propriétés sont meilleures. Il est possible aussi que dans les conditions retenues, les forces agissant sur les fibres soient plus régulières et qu'en conséquence l'étirage se développe de façon plus progressive

# 0 131 524

avec moins de ruptures des filaments ou des ruptures plus tardives.

Quelles que soient les raisons, on constate effectivement des améliorations sensibles des qualités des produits comme le montrent les exemples suivants.

La comparaison est établie avec deux produits du commerce qui sont désignés dans ce qui suit par A et B. Ces deux produits sont préparés comme les feutres de l'invention par centrifugation du matériau formant les fibres par les orifices d'un centrifugeur et étirage par un courant gazeux.

Les facteurs étudiés conduisent aux résultats suivants.

## 1. Détermination du taux d'infibrés

L'échantillon analysé est d'abord débarassé du liant qu'il renferme. Il est soumis à un broyage limité qui a pour but de dissocier les infibrés des fibres auxquelles ils sont ordinairement attachés.

Les fibres sont ensuite séparées des infibrés par entrainement à l'eau sur une colonne de séparation parcourue par un courant d'eau ascendant.

Les particules infibrées sont récupérées en bas de la colonne. Elles sont séchées et passées sur des tamis vibrants disposés en série qui retiennent les particules infibrées dont les dimensions sont respectivement supérieures à 100, 80 et 40 micromètres.

Les résultats exprimés en pourcentage en poids de l'échantillon initial sont les suivants :

| Infibrés | A | B | Invention |
|---|---|---|---|
| $40 \times 10^{-6}$ m | 1,7 | 1,9 | 0,63 |
| $80 \times 10^{-6}$ m | 1,3 | 1,6 | 0,15 |
| $100 \times 10^{-6}$ m | 0,3 | 1,3 | 0,05 |

Les feutres selon l'invention se distinguent par le très faible taux d'infibrés et aussi par la faible dimension des infibrés résiduels.

Les erreurs systématiques introduites notamment par la méthode de la séparation des fibres et des infibrés sont négligeables.

## 2. Histogramme des diamètres des fibres

Des numérations sont effectuées sur des échantillons des feutres de l'exemple 1. A partir de ces numérations, en fonction du diamètre mesuré, on établit l'histogramme correspondant puis le diamètre moyen, l'écart type et le coefficient de variation pour chaque échantillon de feutre.

Dans ces mesures de diamètre, les particules infibrées ne sont pas prises en compte.

Les résultats sont les suivants :

| | A | B | Invention |
|---|---|---|---|
| diamètre moyen ($10^{-6}$ m) | 5,3 | 2,9 | 4,5 |
| écart type ($10^{-6}$ m) | 3,4 | 2,7 | 2,5 |
| coeff. variation | 0,64 | 0,93 | 0,5 |

La faible étendue de l'écart type dans le cas de l'invention est particulièrement remarquable d'autant que les fibres sont en moyenne pour l'échantillon considéré moins fines que celles du produit B. Ceci traduit bien un histogramme bien resserré. Autrement dit, les fibres des feutres selon l'invention ont un diamètre relativement constant.

## 3. Estimation des longueurs de fibres (bulking)

6

Les échantillons de 5 g de fibres désensimées par passage au four à 450 °C sont broyées pendant 10 secondes dans 500 cm³ d'eau distillée.

Après broyage, l'ensemble de l'eau et des fibres est transvasé dans une éprouvette graduée de 1000 cm³ et sédimente pendant 5 minutes (sédimentation pratiquement achevée).

A la fin de la sédimentation le niveau supérieur de la colonne de fibres est mesurée en millimètres. Ces mesures sont répétées au moins trois fois pour obtenir une valeur moyenne.

Les résultats de ces mesures sont reportés dans le tableau suivant :

|  | A | B | Invention |
|---|---|---|---|
| hauteur après 3 min (mm) | 41 | 128 | 150 |
| hauteur après 5 min (mm) | 39 | 127 | 149 |

Le tableau précédent montre que les produits selon l'invention sont formés de fibres sensiblement plus longues et/ou plus résistantes que celles des feutres analogues A et B.

4. Masse par unité de surface

Le grammage ou masse par unité de surface des différents feutres et leur résistance thermique sont reportés dans le tableau suivant :

|  | A | B | Invention |
|---|---|---|---|
| $m\,(g/m^2)$ | 1000 | 1350 | 915 |
| $R\,(m^2 \cdot °C/W)$ | 2 | 2 | 2 |
| m/R | 500 | 675 | 457 |

Les feutres selon l'invention nécessitent moins de fibres pour produire la même qualité isolante.

5. Résistance à la traction (ASTM-C-681.76)

Les échantillons sont découpés en forme d'anneaux par emboutissage. Leurs dimensions sont les suivantes :
— longueur totale : 122 mm,
— longueur entre axes : 46 mm,
— rayon de l'évidement : 12,5 mm,
— rayon extérieur : 38 mm.

L'échantillon est pesé puis disposé sur une machine d'essai comportant deux tiges cylindriques de 25 mm de diamètre.

La vitesse de la tige mobile portant l'anneau est de 200 mm/min.

On mesure la force lors de la rupture et l'on détermine le rapport de cette force à la masse de l'échantillon.

Les mesures sont faites d'abord pour des échantillons découpés dans le sens longitudinal du feutre, puis dans le sens transversal.

Les résultats sont les suivants. Ils sont exprimés en gf/g.

|  | A | B | Invention |
|---|---|---|---|
| résistance longitu-dinale | 164 | 148 | 214 |
| résistance transver-sale | 159 | 136 | 183 |

**0 131 524**

Dans les deux sens, la résistance des feutres selon l'invention se montre supérieure à celles des feutres de comparaison.

6. Teneur en poussières

La mesure de la teneur en poussières est faite sur des échantillons de 800 × 400 mm. Ces échantillons sont suspendus en position verticale à un vibreur à l'intérieur d'une cabine.

La fréquence du vibreur est 50 Hz et son amplitude de 2,5 mm. La vibration est maintenue pendant 2 heures.

On récupère au fond de la cabine les particules qui se détachent de l'échantillon. Ces particules sont pesées et leur masse est rapportée à la surface libre des sections du feutre.

On ne tient compte dans cette mesure que de la surface des sections faites dans l'épaisseur du feutre. En effet, la quasi totalité des particules qui se détachent provient de ces surfaces. Elles ont en effet subi les contraintes les plus dures, en particulier lors de la découpe.

Par ailleurs, les faces supérieures et inférieures du feutre par suite du lissage qui s'effectue lors du traitement du feutre dans l'étuve ne laissent pratiquement pas passer de poussières.

Pour le feutre A, on trouve une émission de 0,16 g/m$^2$ de section. Cette valeur n'est que de 0,07 g/m$^2$ pour le feutre selon l'invention.

7. Perméabilité à l'air

La détermination de cette perméabilité qui est le reflet de la bonne distribution des fibres est mesurée en suivant la norme ISO-DIS-4638.

Selon cette norme, un écoulement d'air est créé à travers une éprouvette de caractéristiques bien définies. La mesure de la chute de pression entre les deux faces libres de l'éprouvette mesure sa perméabilité.

Des mesures ont été faites sur des produits présentant deux masses volumiques bien distinctes (10 et 20 kg/m$^3$). Les résultats sont regroupés dans le tableau suivant. Ils sont exprimés en unités CGS en Rayl/cm.

| kg/m$^3$ | A | B | Invention |
|----------|-----|-----|-----------|
| 10 | 3 | 3 | 4,8 |
| 20 | 8 | 7,5 | 12 |

Les bonnes performances des feutres selon l'invention sont confirmées par une simple observation. Les fibres sont disposées de façon bien stratifiée et il n'apparait pas de zone présentant une teneur en fibres moindre.

Dans ces conditions et compte tenu des qualités des fibres que nous avons indiquées précédemment (régularité, absence d'infibrés, ...) la meilleure résistance au passage de l'air apparaît bien cohérente avec les autres résultats que nous avons signalés, en particulier avec l'amélioration de la résistance thermique pour un même grammage (ou ce qui est équivalent l'obtention d'une même résistance thermique pour un grammage moindre).

8. Résistance à la compression

Des feutres légers, de résistance thermique 2 m$^2$°K/w, dont l'épaisseur nominale garantie à l'utilisateur est de 90 mm, ont été conditionnés sous forme de rouleaux. Dans ces rouleaux l'épaisseur du feutre est une fraction seulement de l'épaisseur nominale.

On a déterminé pour les produits selon l'invention et pour les produits A et B le taux maximum de compression (rapport de l'épaisseur nominale à l'épaisseur à l'état comprimé) qui permet après quatre mois à l'état comprimé la reprise de l'épaisseur nominale.

Les résultats sont les suivants :

| | A | B | Invention |
|---|-----|-----|-----------|
| taux de compression | 4 | 4 | 5 |

Les résultats montrent que les feutres selon l'invention présentent une résistance à la compression plus élevée. Ces résultats sont d'autant meilleurs que le grammage du produit selon l'invention est plus faible comme nous l'avons vu précédemment.

## Revendications

1. Feutre constitué de fibres d'un matériau verrier, les fibres étant produites par passage du matériau à l'état fondu par des orifices disposés à la périphérie d'un centrifugeur et éventuellement étirées par des courants gazeux entourant le centrifugeur, caractérisé en ce que la masse des particules dont le diamètre est supérieur à 10 fois le diamètre moyen des fibres constitue moins de 1 % de la masse du feutre.

2. Feutre selon la revendication 1 dans lequel la masse des particules dont le diamètre est supérieur à 20 fois le diamètre moyen des fibres constitue moins de 0,30 % de la masse du feutre.

3. Feutre constitué de fibres d'un matériau verrier, les fibres étant produites par passage du matériau à l'état fondu par des orifices disposés à la périphérie d'un centrifugeur et éventuellement étirées par des courants gazeux entourant le centrifugeur, caractérisé en ce que la masse des particules infibrées dont le diamètre apparent est supérieur à 40 micromètres représente au plus 1 % de la masse des fibres constituant le feutre.

4. Feutre selon la revendication 3 dans lequel la masse des particules infibrées, dont le diamètre est supérieur à 40 micromètres, représente au plus 0,80 % de la totalité de la masse des fibres constituant le feutre.

5. Feutre selon la revendication 3 ou la revendication 4 dans lequel la proportion pondérale des particules infibrées dont le diamètre est supérieur à 80 micromètres est au plus de 0,30 %.

6. Feutre constitué de fibres d'un matériau verrier, les fibres étant produites par passage du matériau à l'état fondu par les orifices disposés à la périphérie d'un centrifugeur et éventuellement étirées par des courants gazeux entourant le centrifugeur, caractérisé en ce que le coefficient de variation pour le diamètre des fibres est inférieur à 0,65 %.

7. Feutre selon la revendication 6, caractérisé en ce que le coefficient de variation du diamètre des fibres est inférieur à 0,6.

8. Feutre selon l'une quelconque des revendications précédentes, caractérisé en ce que le taux de poussières libéré par un échantillon est inférieur à 0,1 g/m$^2$ de surface des bords.

9. Feutre selon l'une quelconque des revendications précédentes, caractérisé en ce que la résistance à la traction des anneaux (ASTM-C-681.76) dans le sens de la longueur du feutre est au moins égale à 200 gf/g.

10. Feutre selon l'une quelconque des revendications précédentes, caractérisé en ce que sa résistance au passage d'air (ISO-DIS-4638) est au moins de 4 Rayl/cm pour une masse volumique de 10 kg/m$^3$.

11. Feutre selon l'une quelconque des revendications 1 à 9, caractérisé en ce que sa résistance au passage d'air est au moins de 10 Rayl/cm pour une masse volumique de 20 kg/m$^3$.

12. Feutre selon l'une quelconque des revendications précédentes dont le taux de compression admissible pour une durée de stockage de trois mois égal ou supérieur à 5.

## Claims

1. Felt consisting of fibres of a glass material, the fibres being produced by passage of the material in the molten state through orifices disposed on the periphery of a centrifuge and possibly drawn out by gaseous currents surrounding the centrifuge, characterised in that the mass of particles of a diameter greater than ten times the mean diameter of the fibres constitutes less than 1 % of the mass of the felt.

2. Felt according to Claim 1 in that the mass of particles of which the diameter is greater than twenty times the mean diameter of the fibres constitutes less than 0.30 % of the mass of felt.

3. Felt consisting of fibres of a glass material, the fibres being produced by passage of the material in the molten state through orifices disposed on the periphery of the centrifuge and possibly drawn out by gaseous currents surrounding the centrifuge, characterised in that the mass of non fiberized particles of which the apparent diameter is greater than 40 micrometres represents at most 1 % of the mass of fibres constituting the felt.

4. Felt according to Claim 3 in which the mass of non fiberized particles of which the diameter is greater than 40 micrometres represents at most 0.80 % of the total mass of fibres constituting the felt.

5. Felt according to Claim 3 or Claim 4 in which the proportion by weight of non fiberized particles of which the diameter exceeds 80 micrometres is not more than 0.30 %.

6. Felt consisting of fibres of a glass material, the fibres being produced by passage of the material in the molten state through orifices disposed on the periphery of a centrifuge and possibly drawn out by gaseous currents surrounding the centrifuge, characterised in that the coefficient of fluctuation in the diameter of the fibres is less than 0.65 %.

7. Felt according to Claim 6, characterised in that the coefficient of fluctuation in the diameter of the fibres is less than 0.6.

8. Felt according to any one of the preceding Claims, characterised in that the level of dust released by a sample is less than 0.1 g/m$^2$ of surface area of the edges.

9. Felt according to any one of the preceding Claims, characterised in that the traction resistance of rings (ASTM-C-681.76) in the direction of the length of the felt is at least equal to 200 gf/g.

10. Felt according to any one of the preceding Claims, characterised in that its resistance to the passage of air (ISO-DIS-4638) is at least 4 Rayl/cm for a volumetric mass of 10 kg/m³.

11. Felt according to any one of Claims 1 to 9, characterised in that its resistance to the passage of air is at least 10 Rayl/cm for a volumetric mass of 20 kg/m³.

12. Felt according to any one of the preceding Claims in which the rate of compression admissible for a period of three months' storage is equal to or greater than 5.

**Patentansprüche**

1. Filz aus Fasern eines glasartigen Materials, welche erzeugt werden indem das Material im geschmolzenen Zustand Öffnungen passiert, die am Umfang einer Zentrifuge angeordnet sind und das gegebenenfalls durch die Zentrifuge umgebende Gasströme ausgezogen wird, dadurch gekennzeichnet, daß die Masse derjenigen Teilchen, deren Durchmesser 10 mal größer ist als der durchschnittliche Durchmesser der Fasern, weniger als 1 % des Filzes beträgt.

2. Filz nach Anspruch 1, bei welchem die Masse derjenigen Teilchen, deren Durchmesser 20 mal größer ist als der durchschnittliche Durchmesser der Fasern, weniger als 0,30 % des Filzes beträgt.

3. Filz aus Fasern eines glasartigen Materials, welche erzeugt werden indem das Material im geschmolzenen Zustand Öffnungen passiert, die am Umfang einer Zentrifuge angeordnet sind und das gegebenenfalls durch die Zentrifuge umgebende Gasströme ausgezogen wird, dadurch gekennzeichnet, daß die Masse der unzerfaserten Teilchen, deren scheinbarer Durchmesser größer als 40 μm ist, höchstens 1 % der den Filz bildenden Fasern beträgt.

4. Filz nach Anspruch 3, bei welchem die Masse der unzerfaserten Teilchen, deren Durchmesser größer als 40 μm ist, höchstens 0,80 % der den gesamten Filz bildenden Fasern beträgt.

5. Filz nach Anspruch 3 oder 4, bei welchem das Gesamtverhältnis der unzerfaserten Teilchen, deren Durchmesser größer ist als 80 μm, höchstens 0,30 % beträgt.

6. Filz aus Fasern eines glasartigen Materials, welche erzeugt werden indem das Material im geschmolzenen Zustand Öffnungen passiert, die am Umfang einer Zentrifuge angeordnet sind und das gegebenenfalls durch die Zentrifuge umgebende Gasströme ausgezogen wird, dadurch gekennzeichnet, daß der Variationskoeffizient für den Durchmesser der Fasern geringer ist als 0,65 %.

7. Filz nach Anspruch 6, dadurch gekennzeichnet, daß der Variationskoeffizient des Faserdurchmessers geringer ist als 0,6.

8. Filz nach einem der vorherigen Ansprüche, dadurch gekennzeichnet, daß der lose Staubanteil bei einer Probe bezogen auf die Oberfläche der Ränder geringer ist als 0,1 g/m².

9. Filz nach einem der vorherigen Ansprüche, dadurch gekennzeichnet, daß die Ringreißfestigkeit (ASTM-C-681. 76) in Längsrichtung des Filzes wenigstens gleich 200 gf/g beträgt.

10. Filz nach einem der vorherigen Ansprüche, dadurch gekennzeichnet, daß der Luftströmungswiderstand (ISO-DIS-4638) bei einer Rohdichte von 10 kg/m³ wenigstens 4 Rayl/cm beträgt.

11. Filz nach einem der Ansprüche 1 bis 9, dadurch gekennzeichnet, daß der Luftströmungswiderstand bei einer Rohdichte von 20 kg/m³ wenigstens 10 Rayl/cm beträgt.

12. Filz nach einem der vorherigen Ansprüche, dessen annehmbarer Kompressionsfaktor bei einer Lagerungsdauer von drei Monaten gleich oder höher als 5 ist.